# EUROPEAN PATENT APPLICATION

(11) **EP 4 746 012 A1**
(43) Date of publication of application: **20.05.2026**
(21) Application number: 23945560.3
(22) Date of filing: 06.09.2023
(51) Int. Cl.: H01H 9/02

(54) **POWER-OFF DEVICE, BATTERY AND ELECTRIC DEVICE**

(30) Priority: 20.07.2023 CN 202310898161
(71) Applicant: Contemporary Amperex Intelligence Technology (Shan Hai) Limited, Shanghai 201306 (CN); Contemporary Amperex Technology Co., Limited, Ningde, Fujian 352100 (CN)
(72) Inventor: WU, Kai, Shanghai 201306 (CN); ZHU, Xianchun, Shanghai 201306 (CN); HOU, Yizhen, Shanghai 201306 (CN); LI, Bao, Shanghai 201306 (CN); LIU, Linxin, Shanghai 201306 (CN)
(74) Representative: Gong, Jinping
(86) International application number: PCT/CN2023/117310
(87) International publication number: WO 2025/015678

(57) **Abstract**

A power-off device (3), a battery (100), and an electric device. The power-off device (3) comprises: an insulating base (31) on which at least two conductive pieces are provided; and a circuit breaker piece (32) which is detachably arranged on the insulating base (31), wherein the circuit breaker piece (32) and the at least two conductive pieces (33) are connected in series and are in an electrical connection so that an assembly formed by means of the circuit breaker piece (32) and the at least two conductive pieces (33) can transmit electrical energy, and the circuit breaker piece (32) is configured to be capable of cutting off the electrical connection when a preset condition is satisfied.

## Description

### CROSS-REFERENCE TO RELATED APPLICATIONS

This application is based on, and claims priority to, the Chinese Patent Application No. 202310898161.6 filed on July 20, 2023, which is incorporated herein by reference in its entirety.

### TECHNICAL FIELD

This application relates to the technical field of batteries, and in particular, to a power-off device, a battery, and an electric device.

### BACKGROUND

In recent years, new energy vehicles have developed by leaps and bounds. In the field of electric vehicles, power batteries, as the power source of electric vehicles, play an irreplaceable role. The battery is formed by a box body and a plurality of battery cells accommodated in the box body. As a core component of new energy vehicles, high requirements for both safety and service life are imposed on batteries. However, due to presence of a high-voltage circuit in the battery and lack of a high-voltage power-off protection mechanism, reliability of the battery is relatively poor, affecting performance and service life of the battery, thereby posing significant safety hazards during use of the battery, which affects consumer safety.

### SUMMARY

Embodiments of this application provide a power-off device, a battery, and an electric device, which can effectively address the problems of poor safety and reliability of a battery due to presence of a high-voltage circuit in the battery.

In a first aspect, embodiments of this application provide a power-off device, including: an insulating base, where the insulating base is provided with at least two conductive pieces; and a circuit breaker piece, where the circuit breaker piece is detachably provided on the insulating base; the circuit breaker piece is electrically connected in series to the at least two conductive pieces, so that an assembly formed by the circuit breaker piece and the at least two conductive pieces can transmit electrical energy; and the circuit breaker piece is configured to be capable of cutting off the electrical connection when a preset condition is satisfied.

In the above technical solution, since the cutoff device provides both maintenance power-off and short-circuit power-off protection, the circuit breaker piece can provide short-circuit power-off protection; further, during maintenance power-off, only the circuit breaker piece needs to be detached from the insulating base to cooperate with the insulating base to achieve maintenance power-off, which helps improve the reliability of the battery. In addition, since integration of the cutoff device is relatively high, a quantity of components can be reduced, which helps optimize an overall dimension of the device, reducing a volume of the cutoff device, thereby reducing a mounting space required for the cutoff device, and facilitating mounting of other components on the battery.

In some embodiments of this application, the preset condition is that a transmitted current reaches a set value or an external control instruction is received. In this technical solution, the preset condition may be understood as a short circuit or an accident such as a collision of the battery, at which time a current on the assembly formed by the circuit breaker piece and the at least two conductive pieces changes. When the current reaches the set value, the circuit breaker piece cuts off the electrical connection. Alternatively, the preset condition is an external control instruction. When other equipment such as an external detection device determines that a relatively dangerous event occurs, a control instruction can be directly issued to the circuit breaker piece, and after receiving the control instruction, the circuit breaker piece cuts off an internal circuit path of the circuit breaker piece, thereby cutting off the electrical connection. By cutting off the circuit, occurrence or deterioration of danger can be suppressed or prevented, ensuring equipment safety.

In some embodiments of this application, the insulating base is provided with a first accommodating portion, the first accommodating portion is provided with an opening, and at least part of the circuit breaker piece is provided in the first accommodating portion.

In the above technical solution, the first accommodating portion may accommodate the circuit breaker piece and limit a position of the circuit breaker piece, improving the mounting reliability and stability between the circuit breaker piece and the insulating base. The circuit breaker piece is detachably connected to the insulating base and then limited by the first accommodating portion. In this way, the circuit breaker piece can be effectively fastened, which can reduce the probability of detachment of the circuit breaker piece from the insulating base, and help improve the reliability of the cutoff device in an energized state.

In some embodiments of this application, the insulating base is provided with a set surface, the opening is provided on the set surface, and the set surface is provided with an annular convex portion along a circumferential edge of the opening.

In the above technical solution, the convex portion is provided along the circumferential edge of the opening to form an annular structure, guiding the mounting of the circuit breaker piece and reducing mounting difficulty of the circuit breaker piece; and protecting the circuit breaker piece. During assembly of the cutoff device and the battery, the annular convex portion can reduce the probability of lateral collision between other components of the battery and the circuit breaker piece on the set surface, reducing damage to the circuit breaker piece. This improves the safety of the circuit breaker piece, helps prolong a service life of the cutoff device, and improves reliability of the cutoff device.

In some embodiments of this application, in a protruding direction of the convex portion, at least part of the circuit breaker piece is located in an annular space formed by the convex portion.

In the above technical solution, at least part of the circuit breaker piece is located in the annular space formed by the convex portion. In this case, while a nesting depth of the circuit breaker piece and the first accommodating portion satisfies requirements for the mounting stability and reliability, a dimension of the insulating base in the protruding direction of the convex portion can be reduced, and a volume of the cutoff device can be further reduced, thereby reducing the mounting space required for the cutoff device and providing sufficient mounting space for other components of the battery.

In some embodiments of this application, the power-off device further includes a cover plate, a set space is formed between the cover plate and the set surface, the set space is configured for mounting a fastening plate, a second accommodating portion is provided on a side of the cover plate close to the set surface, and part of the convex portion is located in the second accommodating portion.

In the above technical solution, the cover plate may cover the circuit breaker piece, reducing the probability of dust or water stains falling on the circuit breaker piece, thereby reducing the impact of dust or water stains on the circuit breaker piece and helping to reduce the probability of failure of the circuit breaker piece. Since the set surface is provided with the convex portion, the second accommodating portion on the cover plate can avoid the convex portion, reducing the impact of the convex portion on the mounting of the cover plate.

In some embodiments of this application, the circuit breaker piece is provided with an outer end close to the opening, and a pulling portion is provided on the outer end.

In this technical solution, when the circuit breaker piece needs to be detached, the pulling portion may cooperate with a tool to detach the circuit breaker piece from the first accommodating portion, reducing the detachment difficulty of the circuit breaker piece. When the battery needs maintenance or the power-off device is mounted on the battery, the pulling portion can improve the detachment efficiency of the circuit breaker piece, improving the maintenance or mounting efficiency of the battery.

In some embodiments of this application, the pulling portion is a handle, and in a protruding direction of the convex portion, a height of the handle relative to the set surface is greater than or equal to a height of the convex portion.

The above technical solution can be understood as follows: the handle may extend out of the annular space formed by the convex portion on the set surface, and an operator or an external tool can more easily act on the handle with fewer obstacles in a surrounding space of the handle, facilitating the removal of the circuit breaker piece from the first accommodating portion.

In some embodiments of this application, the insulating base is provided with a set surface, the circuit breaker piece is provided on the set surface, the power-off device further includes a cover plate, a set space is formed between the cover plate and the set surface, the set space is configured for mounting a fastening plate, a second accommodating portion is provided on a side of the cover plate close to the set surface, and at least part of the circuit breaker piece is located in the second accommodating portion. In this technical solution, the cover plate may accommodate the circuit breaker piece, reducing the probability of dust or water stains falling on the circuit breaker piece, thereby reducing the impact of dust or water stains on the circuit breaker piece and helping reduce the probability of failure of the circuit breaker piece.

In some embodiments of this application, the power-off device further includes a sealing ring, and the sealing ring is provided on a side of the cover plate close to the set surface. In this technical solution, the sealing ring can achieve sealing between the cover plate and the fastening plate, improving the dustproof and waterproof performance of the circuit breaker piece, further reducing the impact of dust or water stains on the circuit breaker piece, and reducing the probability of failure of the circuit breaker piece.

In some embodiments of this application, the circuit breaker piece is provided with at least two lead-out portions, and the at least two lead-out portions are electrically connected inside the circuit breaker piece, where the at least two lead-out portions are connected to the at least two conductive pieces in a one-to-one correspondence.

In the above technical solution, since at least two conductive pieces are provided and both are electrically connected to the circuit breaker piece, at least two lead-out portions are provided on the circuit breaker piece, and the lead-out portions are electrically connected to the corresponding conductive pieces, facilitating the electrical connection between the conductive pieces and the circuit breaker piece. In this case, the connection between the circuit breaker piece and the conductive pieces are relatively regular, aesthetically pleasing and easy for electrical connection.

In some embodiments of this application, an adapter is provided between the lead-out portion and the corresponding conductive piece, and the adapter is provided in the first accommodating portion and is electrically connected to the conductive piece and the lead-out portion.

In the above technical solution, the lead-out portion and the conductive piece are electrically connected through the adapter. Since the circuit breaker piece is frequently detached from the first accommodating portion, the wear caused by frequent detachment of the circuit breaker piece is mainly concentrated on the adapter, and the conductive piece does not contact the circuit breaker piece and is not worn. This reduces a replacement frequency and cycle of the conductive piece and prolongs a service life of the conductive piece. Moreover, since the adapter is a consumable part, only the adapter needs to be replaced. Since the replacement frequency of the conductive piece is reduced, a probability of error caused by positioning accuracy of the conductive piece on the insulating base due to replacement can also be reduced.

In some embodiments of this application, the lead-out portion is provided with a first hole, the adapter is provided with a second hole, the power-off device further includes a first fastener, and the first fastener passes through the first hole and the second hole.

In the above technical solution, the adapter can fasten the lead-out portion, improving the mounting reliability and stability of the circuit breaker piece in the first accommodating portion. The lead-out portion is fastened to the adapter through the cooperation of the first fastener, the first hole, and the second hole. This fastening method is relatively simple, and good fastening effect can be achieved.

In some embodiments of this application, the adapter is provided with a third hole, the insulating base is provided with a fourth hole communicating with the first accommodating portion, the conductive piece is provided with a fifth hole, the power-off device further includes a second fastener, and the second fastener passes through the fifth hole, the fourth hole, and the third hole.

In the above technical solution, the adapter can fasten the conductive piece, improving the mounting reliability and stability of the conductive piece on the insulating base. The lead-out portion is fastened to the adapter through the cooperation of the first fastener, the first hole, and the second hole. This fastening method is relatively simple, and good fastening effect can be achieved. The conductive piece can be detached from the insulating base, facilitating maintenance or replacement of the conductive piece.

In some embodiments of this application, the circuit breaker piece has a width direction; in the width direction, a width of the lead-out portion is smaller than a width of the circuit breaker piece; the first accommodating portion includes a first space and a second space communicating with each other; in the width direction, a width of the second space is smaller than a width of the first space; the circuit breaker piece is provided in the first space; and the lead-out portion is provided in the second space.

In the above technical solution, with the width of the lead-out portion smaller than the width of the circuit breaker piece, material can be saved and the space of the first accommodating portion can be reduced. The first accommodating portion includes the first space and the second space, where the first space may be adapted to the circuit breaker piece, and the second space may be adapted to the lead-out portion, helping reduce the volume of the insulating base.

In some embodiments of this application, a set wall is provided inside the first accommodating portion, the set wall is directly opposite the opening, the set wall is provided with a first plug-in member, the circuit breaker piece is provided with a second plug-in member, and the second plug-in member is plug-fitted with the first plug-in member.

In the above technical solution, the set wall and the opening are located in an assembly direction of the circuit breaker piece, the first plug-in member is provided on the set wall, and when the circuit breaker piece is mounted into the first accommodating portion along the assembly direction, with the movement of the circuit breaker piece, the second plug-in member may be plug-fitted with the first plug-in member, and a signal on the circuit breaker piece can be transmitted through the first plug-in member and the second plug-in member.

In a second aspect, embodiments of this application further provide a battery, including the power-off device.

In a third aspect, embodiments of this application further provide an electric device, including the power-off device or the battery.

### BRIEF DESCRIPTION OF DRAWINGS

In order to more clearly illustrate the technical solutions of the embodiments of this application, the drawings required in the embodiments will be briefly introduced below. It should be understood that the following drawings only show certain embodiments of this application and therefore should not be regarded as limitation to the scope. For those of ordinary skill in the art, other related drawings can be obtained based on these drawings without creative effort.
FIG. 1 is a schematic structural diagram of a vehicle provided by some embodiments of this application;
FIG. 2 is a structural exploded view of a battery provided by some embodiments of this application;
FIG. 3 is an exploded view of a power-off device provided by some embodiments of this application;
FIG. 4 is a three-dimensional view of a power-off device provided by some embodiments of this application;
FIG. 5 is a first cross-sectional view of a power-off device provided by some embodiments of this application; and
FIG. 6 is a second cross-sectional view of a power-off device provided by some embodiments of this application.

Reference signs: 1000. vehicle; 100. battery; 200. controller; 300. motor; 10. box body; 11. first box body; 12. second box body; 20. battery cell; 3. power-off device; 31. insulating base; 31a. fourth hole; 311. set surface; 312. second mounting hole; 313. fourth mounting hole; 32. circuit breaker piece; 321. outer end; 322. pulling portion; 323. lead-out portion; 324. second plug-in member; 323a. first hole; 33. conductive piece; 33a. fifth hole; 34. first accommodating portion; 341. first space; 342. second space; 343. set wall; 3431. first plug-in member; 34a. opening; 35. convex portion; 36. cover plate; 361. first mounting hole; 37. second accommodating portion; 38. sealing ring; 39. adapter; 39a. second hole; 39b. third hole; 4. fastening plate; 4a. third mounting hole; 4b. fifth mounting hole; 4c. avoidance hole; 41. first fastener; 42. second fastener; 43. third fastener; and 44. fourth fastener.

### DETAILED DESCRIPTION OF EMBODIMENTS

To make the purposes, technical solutions, and advantages of the embodiments of this application clearer, the technical solutions in the embodiments of this application will be clearly described below with reference to the drawings in the embodiments of this application. It is clear that the described embodiments are some but not all embodiments of this application. Based on the embodiments in this application, all other embodiments obtained by those of ordinary skill in the art without creative effort fall within the protection scope of this application.

Unless otherwise defined, all technical and scientific terms used in this application have the same meaning as commonly understood by those skilled in the technical field to which this application pertains; the terms used in the specification of this application are only for the purpose of describing specific embodiments and are not intended to limit this application; the terms "include" and "have" and any variations thereof in the specification, claims, and the above description of drawings of this application are intended to cover non-exclusive inclusion. The terms "first", "second", and the like in the specification and claims or the above drawings of this application are used to distinguish different objects, rather than to describe a specific order or primary-secondary relationship.

Reference in this application to "an embodiment" means that a particular feature, structure, or characteristic described with reference to the embodiment may be included in at least one embodiment of this application. The appearance of the phrase in various places in the specification does not necessarily refer to the same embodiment, nor is it an independent or alternative embodiment mutually exclusive with other embodiments.

In the description of this application, it should be noted that, unless otherwise explicitly specified and limited, the terms "mount", "connect", "join", and "attach" should be understood in a broad sense, for example, it may be a fixed connection, a detachable connection, or an integral connection; or direct connection, indirect connection through an intermediate medium, or internal communication of two elements. For those of ordinary skill in the art, the specific meanings of the above terms in this application can be understood according to specific situations.

The term "and/or" in this application is merely a description of the association relationship of associated objects, indicating that three relationships can exist, for example, A and/or B can indicate: A exists alone, both A and B exist, and B exists alone. In addition, the character "/" in this application generally indicates that the associated objects before and after are in an "or" relationship.

In the embodiments of this application, the same reference signs denote the same components, and for brevity, detailed descriptions of the same components are omitted in different embodiments. It should be understood that the thickness, length, width, and other dimensions of various components shown in the drawings of the embodiments of this application, as well as the overall thickness, length, width, and other dimensions of an integrated device, are only exemplary illustrations and should not constitute any limitation to this application.

"A plurality of" appearing in this application means two or more (including two).

The battery mentioned in the embodiments of this application refers to a single physical module including one or more battery cells to provide higher voltage and capacity. For example, the battery mentioned in this application may include a battery module, a battery pack, or the like. The battery generally includes a box body for encapsulating one or more battery cells or a plurality of battery modules. The box body can prevent liquid or other foreign matter from affecting the charge or discharge of the battery cell.

In this application, the battery cell may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of this application. The battery cell may be cylindrical, flat, rectangular, or in other shapes, which is also not limited in the embodiments of this application. Battery cells are generally classified into three types according to the packaging methods: cylindrical battery cell, prismatic battery cell, and pouch battery cell, which is also not limited in the embodiments of this application.

The battery cell includes a housing, an electrode assembly, and an electrolyte. The housing is configured to accommodate the electrode assembly and the electrolyte. The electrode assembly is formed by a positive electrode sheet, a negative electrode sheet, and a separator. Operation of the battery cell mainly relies on the movement of metal ions between the positive electrode sheet and the negative electrode sheet. The positive electrode sheet includes a positive electrode current collector and a positive electrode active material layer. The positive electrode active material layer is applied to a surface of the positive electrode current collector. The positive electrode current collector not coated with the positive electrode active material layer protrudes from the positive electrode current collector coated with the positive electrode active material layer. The positive electrode current collector not coated with the positive electrode active material layer serves as a positive electrode tab. A lithium-ion battery is used as an example. A material of the positive electrode current collector may be aluminum, and the positive electrode active material may be lithium cobaltate, lithium iron phosphate, ternary lithium, lithium manganate, or the like. The negative electrode sheet includes a negative electrode current collector and a negative electrode active material layer. The negative electrode active material layer is applied to a surface of the negative electrode current collector. The negative electrode current collector not coated with the negative electrode active material layer protrudes from the negative electrode current collector coated with the negative electrode active material layer, and the negative electrode current collector not coated with the negative electrode active material layer serves as a negative electrode tab. A material of the negative electrode current collector may be copper, and the negative electrode active material may be carbon, silicon, or the like. To ensure passage of a large current without fusing, a plurality of positive electrode tabs are stacked together, and a plurality of negative electrode tabs are stacked together.

A material of the separator may be PP (polypropylene, polypropylene), PE (polyethylene, polyethylene), or the like. In addition, the electrode assembly may be a wound structure or a stacked structure, which is not limited in the embodiments of this application.

In recent years, new energy vehicles have developed by leaps and bounds. In the field of electric vehicles, power batteries, as the power source of electric vehicles, play an irreplaceable role. The battery is formed by a box body and a plurality of battery cells accommodated in the box body. As a core component of new energy vehicles, high requirements for both reliability and cycle life are imposed on batteries.

In a power battery, to ensure that the battery obtains sufficient power, a plurality of battery cells in a box body of the battery are usually stacked in an arrangement to enable the power battery to provide a high-voltage platform required by the vehicle. As requirements for new energy vehicles become higher, currently, the highest voltage platform has risen to 1000V. However, an energy compartment lacks a high-voltage power-off protection mechanism, posing a risk of high-voltage electrification during assembly and maintenance, and in the event of a short circuit or collision, the high voltage causes extremely great dangers. If power supply cannot be cut off, safety accidents are easily triggered, and the reliability of the battery is relatively poor.

In view of this, to solve the problem of poor reliability of the battery due to presence of a high-voltage circuit, the inventors have designed a power-off device 3 including an insulating base 31 and a circuit breaker piece 32; the insulating base 31 is provided with at least two conductive pieces 33; the circuit breaker piece 32 is detachably provided on the insulating base 31; the circuit breaker piece 32 is electrically connected in series to the at least two conductive pieces 33, so that an assembly formed by the circuit breaker piece 32 and the at least two conductive pieces 33 can transmit electrical energy; and the circuit breaker piece 32 is configured to be capable of cutting off the electrical connection when a preset condition is satisfied.

The power-off device 3 may be applied in a battery 100. In the power-off device 3 of such structure, the two conductive pieces 33 may be connected in series in a high-voltage circuit of the battery 100. In assembly or maintenance of the battery 100, the circuit breaker piece 32 may be detached from the insulating base 31, thereby cutting off the high-voltage circuit, which helps eliminate the risk of high-voltage electrification of the battery 100 and the electric device during assembly or maintenance. When a dangerous event occurs in the battery 100, the high-voltage circuit is prone to cause safety accidents, at which time the circuit breaker piece 32 can cut off the electrical connection when a set condition is satisfied, reducing the probability of dangerous events, thereby cutting off the high-voltage circuit and reducing the probability of safety accidents. Since the circuit breaker piece 32 is detachably provided on the insulating base 31, the power-off device 3 can provide maintenance power-off and short-circuit power-off protection. The power-off device 3 has both of the above power-off functions, with a relatively small quantity of components and a relatively small volume, which helps save mounting space.

The battery 100 disclosed in the embodiments of this application may be used, but is not limited to, in electric devices such as vehicles, ships, or aircraft. The embodiments of this application provide an electric device using the battery 100 as a power source, and the electric device may be, but is not limited to, a mobile phone, a tablet, a laptop, an electric toy, an electric tool, an electric bicycle, an electric vehicle, a ship, a spacecraft, or the like. The electric toy may include a fixed or mobile electric toy, such as a game console, an electric vehicle toy, an electric ship toy, an electric airplane toy, and the like, and the spacecraft may include an airplane, a rocket, a space shuttle, a spaceship, and the like.

For convenience of explanation, in the following embodiments, as an example for illustration, an electric device according to an embodiment of this application is a vehicle 1000.

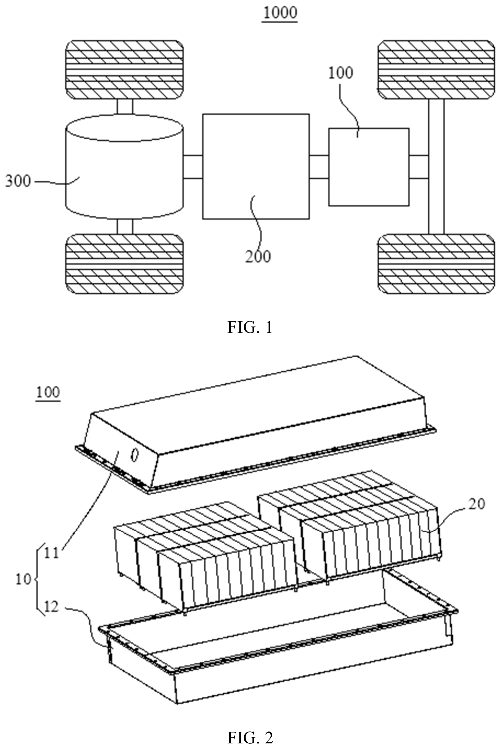

Refer to FIG. 1. FIG. 1 is a schematic structural diagram of a vehicle 1000 provided by some embodiments of this application. The vehicle 1000 may be a fuel vehicle, a gas vehicle, or a new energy vehicle, and the new energy vehicle may be a pure electric vehicle, a hybrid vehicle, an extended-range vehicle, or the like. A battery 100 is provided inside the vehicle 1000, and the battery 100 may be provided at the bottom, head, or tail of the vehicle 1000. The battery 100 may be used for power supply of the vehicle 1000, for example, the battery 100 may serve as an operation power source of the vehicle 1000. The vehicle 1000 may further include a controller 200 and a motor 300. The controller 200 is configured to control the battery 100 to supply power to the motor 300, for example, satisfying operation power requirements during startup, navigation, and driving of the vehicle 1000.

In some embodiments of this application, the battery 100 may not only serve as an operation power source of the vehicle 1000 but also as a driving power source of the vehicle 1000, completely or partially replacing fuel or natural gas to provide driving power for the vehicle 1000.

Refer to FIG. 2. FIG. 2. is a structural exploded view of a battery 100 provided by some embodiments of this application. The battery 100 includes a box body 10 and a plurality of battery cells 20, the battery cells 20 are accommodated in the box body 10. The box body 10 is configured to provide an assembly space for the battery cells 20, and the box body 10 may be in various structures. In some embodiments, the box body 10 may include a first box body 11 and a second box body 12; the first box body 11 and the second box body 12 cover each other; and the first box body 11 and the second box body 12 jointly define the assembly space for accommodating the battery cells 20. The second box body 12 may be a hollow structure with one end open. The first box body 11 may be a plate-like structure, and the first box body 11 covers an open side of the second box body 12, so that the first box body 11 and the second box body 12 jointly define the assembly space. The first box body 11 and the second box body 12 may alternatively both be hollow structures with one side open, and the open side of the first box body 11 covers the open side of the second box body 12. Certainly, the box body 10 formed by the first box body 11 and the second box body 12 may be in various shapes, such as a cylinder, a rectangular parallelepiped, or the like.

In the battery 100, the plurality of battery cells 20 may be connected in series, parallel, or series-parallel, where the series-parallel connection means that the plurality of battery cells 20 are connected in series and parallel. The plurality of battery cells 20 may be directly connected in series, parallel, or series-parallel, and then an entirety formed by the plurality of battery cells 20 is accommodated in the box body 10. Certainly, the battery 100 may alternatively be formed in a way that a plurality of battery cells 20 connected in series, parallel, or series-parallel and form battery modules, and then the plurality of battery modules connected in series, parallel, or series-parallel to form an entirety accommodated in the box body 10. The battery 100 may further include other structures, for example, the battery 100 may further include a busbar component for achieving an electrical connection among the plurality of battery cells 20.

In a schematic structural diagram of a part of a battery 100 provided in some embodiments of this application, the battery 100 includes a plurality of rows of battery cells 20; the plurality of rows of battery cells 20 may be arranged along a length direction of the box body 10, where each row of battery cells 20 includes a plurality of battery cells 20 arranged along a width direction of the box body 10; or the plurality of rows of battery cells 20 may be arranged along a width direction of the box body 10, where each row of battery cells 20 includes a plurality of battery cells 20 arranged along a length direction of the box body 10.

Each battery cell 20 may be a secondary battery or a primary battery; and may be a lithium-sulfur battery, a sodium-ion battery, or a magnesium-ion battery, but is not limited thereto. The battery cell 20 may be cylindrical, flat, rectangular, or in other shapes. For example, the battery cell 20 is cylindrical.

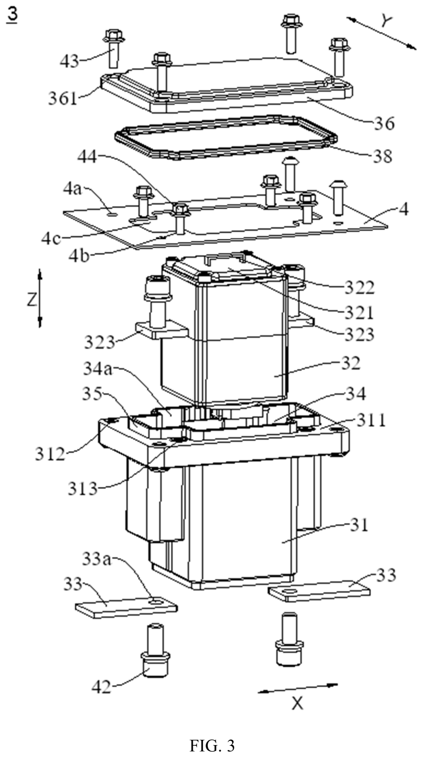

In a first aspect, as shown in FIG. 3, an embodiment of this application provides a power-off device 3, including an insulating base 31 and a circuit breaker piece 32, where the insulating base 31 is provided with at least two conductive pieces 33; the circuit breaker piece 32 is detachably provided on the insulating base 31; the circuit breaker piece 32 is electrically connected in series to the at least two conductive pieces 33, so that an assembly formed by the circuit breaker piece 32 and the at least two conductive pieces 33 can transmit electrical energy; and the circuit breaker piece 32 is configured to be capable of cutting off the electrical connection when a preset condition is satisfied.

The insulating base 31 may refer to a base with an insulating property, mainly made of an insulating material, which can provide a mounting position for another component of the power-off device 3, and the insulating base 31 is in a square shape, circular shape, or the like, but is not limited thereto. Two, three, four, or more conductive pieces 33 may be provided on the insulating base 31, but are not limited thereto. The quantity of conductive pieces 33 may be specifically determined based on situations, and is not limited herein.

The conductive piece 33 may refer to a conductive component made of a conductive material, for example, the conductive material may include but is not limited to copper or silver. The conductive piece 33 may be in a sheet-like shape, linear shape, or the like.

The circuit breaker piece 32 is a breakable component, capable of cutting off the circuit between the two conductive pieces 33, providing safety protection. For example, the circuit breaker piece 32 may be understood as a fuse, that is, a component that can fuse when transmitted current reaches a set value, where the set value may be specifically set based on situations, which is not limited herein. Specifically, the circuit breaker piece 32 may also refer to a pyrofuse (pyrotechnic fuse or high-temperature fuse, pyro switch, or instantaneous circuit breaker), to be specific, a component that can, when a current reaches a set value, cut off an internal circuit path of the circuit breaker piece 32 to cut off a circuit between the two conductive pieces 33 through control of the circuit breaker piece 32 or based on a received external control instruction. A breaking method of the circuit breaker piece 32 is not limited to fuse melting, and breaking may be achieved by exploding a connection busbar with explosives to achieve power-off. Certainly, this is only an example, and the breaking method of the circuit breaker piece 32 includes but is not limited to the above two methods.

The power-off device 3 may be applied in a battery 100 or other electric devices. The battery 100 is used as an example. The assembly formed by the circuit breaker piece 32 and the at least two conductive pieces 33 is equivalent to a wire, connected in series in the high-voltage circuit of the battery 100. To mount the power-off device 3 on the battery 100 or maintain the battery 100, the circuit breaker piece 32 may be first detached from the insulating base 31, thereby cutting off the high-voltage circuit, effectively reducing the risk of high-voltage electrification during assembly of the power-off device 3 and the battery 100. When a dangerous event occurs in the battery 100, the high-voltage circuit is prone to cause safety accidents, for example, the dangerous event may be a short circuit, at which time the circuit breaker piece 32 may cut off the electrical connection when a set condition is satisfied, cutting off the high-voltage circuit, reducing the probability of dangerous events, improving the safety and reliability of the battery 100, and reducing the possibility of dangerous events.

In the above technical solution, since the power-off device 3 implements both maintenance power-off and short-circuit power-off, the circuit breaker piece 32 can provide short-circuit power-off protection; further, during maintenance power-off, only the circuit breaker piece 32 needs to be detached from the insulating base 31 to cooperate with the insulating base 31 to achieve maintenance power-off, which helps improve the reliability of the battery 100. In addition, since integration of the power-off device 3 is relatively high, a quantity of components can be reduced, which helps optimize an overall dimension of the device, reducing a volume of the power-off device 3, thereby reducing a mounting space required for the power-off device 3, and facilitating mounting of other components on the battery 100. Moreover, using fewer components can reduce the input of raw materials, which helps reduce costs.

In some embodiments of this application, the preset condition is that a transmitted current reaches a set value or an external control instruction is received. In this technical solution, the preset condition may be understood as a short circuit or an accident such as a collision of the battery 100, at which time a current on the assembly formed by the circuit breaker piece 32 and the at least two conductive pieces 33 changes. When the current reaches the set value, the circuit breaker piece 32 cuts off the electrical connection, and the set value of the current may refer to a short-circuit current or may be specifically set as needed, which is not limited herein. Alternatively, the preset condition is an external control instruction. When other equipment such as an external detection device determines that a relatively dangerous event occurs, a control instruction can be directly issued to the circuit breaker piece 32, and after receiving the control instruction, the circuit breaker piece 32 cuts off an internal circuit path of the circuit breaker piece 32, thereby cutting off the electrical connection.

In some embodiments of this application, as shown in FIG. 3, FIG. 5, and FIG. 6, the insulating base 31 is provided with a first accommodating portion 34, the first accommodating portion 34 is provided with an opening 34a, and at least part of the circuit breaker piece 32 is provided in the first accommodating portion 34.

The first accommodating portion 34 may refer to a groove or hole serving an accommodating role, or a component with a groove or hole. For example, the first accommodating portion 34 may be an opened groove or hole on the insulating base 31, and the circuit breaker piece 32 may be mounted into the groove or hole through the opening 34a. Alternatively, the first accommodating portion 34 may alternatively be a plurality of limiting plates provided on the insulating base 31, with an accommodating groove formed between the plurality of limiting plates; and the circuit breaker piece 32 may be provided in the accommodating groove via the opening 34a.

In the above technical solution, the first accommodating portion 34 may accommodate at least part of the circuit breaker piece 32 and limit the position of the circuit breaker piece 32, improving the mounting reliability and stability between the circuit breaker piece 32 and the insulating base 31. The circuit breaker piece 32 is detachably connected to the insulating base 31 and then limited by the first accommodating portion 34, which can effectively reduce the probability of detachment of the circuit breaker piece 32 from the insulating base 31, and help improve the reliability of the power-off device 3 in an energized state.

In some embodiments of this application, as shown in FIG. 3, the insulating base 31 is provided with a set surface 311, the opening 34a is provided on the set surface 311, and the set surface 311 is provided with an annular convex portion 35 along a circumferential edge of the opening 34a.

The set surface 311 may refer to one end surface of the insulating base 31, and as shown in FIG. 3, the set surface 311 may refer to an upper end surface of the insulating base 31. The convex portion 35 may refer to a protruding structure provided on the set surface 311, and the convex portion 35 includes but is not limited to an annular convex edge or an annular retaining edge.

In the above technical solution, the convex portion 35 is provided along the circumferential edge of the opening 34a to form an annular structure, guiding the mounting of the circuit breaker piece 32 and reducing mounting difficulty of the circuit breaker piece 32; and protecting the circuit breaker piece 32. During assembly of the power-off device 3 and the battery 100, the annular convex portion 35 can reduce the probability of lateral collision between other components of the battery 100 and the circuit breaker piece 32 on the set surface 311, reducing damage to the circuit breaker piece 32. This improves the safety of the circuit breaker piece 32, helps prolong a service life of the power-off device 3, and improves reliability of the power-off device 3.

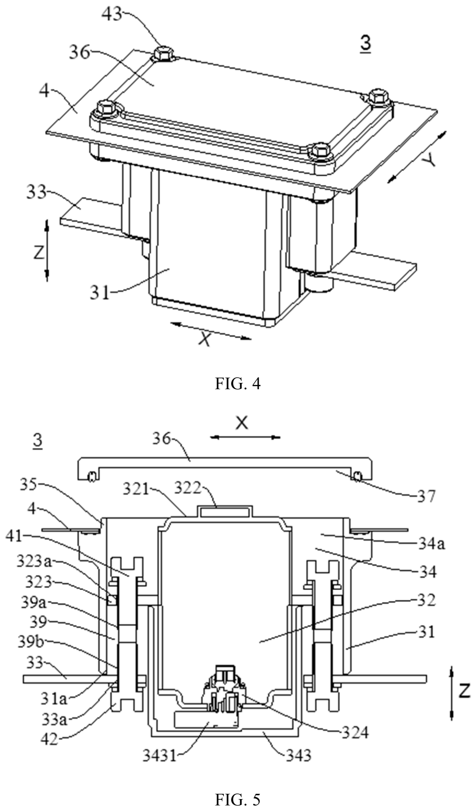

In some embodiments of this application, as shown in FIG. 5, in a protruding direction of the convex portion 35, at least part of the circuit breaker piece 32 is located in an annular space formed by the convex portion 35.

The protruding direction of the convex portion 35 may refer to a third direction (Z direction) in FIG. 5, the circuit breaker piece 32 may be mounted into the first accommodating portion 34 along the third direction, and at least part of the circuit breaker piece 32 is located in the annular space formed by the convex portion 35. In this case, while a nesting depth of the circuit breaker piece 32 and the first accommodating portion 34 satisfies requirements for the mounting stability and reliability, the dimension of the insulating base 31 in the protruding direction of the convex portion 35 can be reduced, and the volume of the power-off device 3 can be further reduced, thereby reducing the mounting space required for the power-off device 3 and providing sufficient mounting space for other components of the battery 100.

In some embodiments of this application, as shown in FIG. 3, FIG. 4, and FIG. 5, the power-off device 3 further includes a cover plate 36, a set space is formed between the cover plate 36 and the set surface 311, the set space is configured for mounting a fastening plate 4, a second accommodating portion 37 is provided on a side of the cover plate 36 close to the set surface 311, and part of the convex portion 35 is located in the second accommodating portion 37.

The cover plate 36 may refer to a cover component that provides protection.

The fastening plate 4 may refer to a component for providing a mounting position for the insulating base 31. For example, the fastening plate 4 may be a component provided on the box body 10 of the battery 100; and the fastening plate 4 may also be part of the box body 10, that is, the fastening plate 4 may be one box wall of the box body 10.

A set space is formed between the cover plate 36 and the set surface 311, and the set space is configured for mounting the fastening plate 4. This can be understood as that the cover plate 36 and the set surface 311 are located on two opposite sides of the fastening plate 4. For example, the fastening plate 4 is part of the box body 10, the set surface 311 abuts against an inner side surface of the box body 10, the cover plate 36 abuts against an outer side surface of the box body 10, and the box body 10 may be provided with an avoidance hole 4c corresponding to the opening 34a. In this way, the insulating base 31 may be provided on the inner side of the box body 10, and the circuit breaker piece 32 may be inserted into or pulled out from the insulating base 31 on the outer side of the box body 10. According to this method, the arrangement between the power-off device 3 and the battery 100 is more compact, which can improve space utilization.

The second accommodating portion 37 may refer to an opened groove on the cover plate 36, or a protruding component with a groove on the cover plate 36.

In the above technical solution, the cover plate 36 may cover the circuit breaker piece 32, reducing the probability of dust or water stains falling on the circuit breaker piece 32, thereby reducing the impact of dust or water stains on the circuit breaker piece 32 and helping to reduce the probability of failure of the circuit breaker piece 32. Since the set surface 311 is provided with the convex portion 35, the second accommodating portion 37 on the cover plate 36 can accommodate and avoid the convex portion 35, reducing the impact of the convex portion 35 on the mounting of the cover plate 36.

In some embodiments of this application, as shown in FIG. 3 and FIG. 5, the circuit breaker piece 32 is provided with an outer end 321 close to the opening 34a, and a pulling portion 322 is provided on the outer end 321.

The pulling portion 322 may refer to a component for convenient pulling, including but not limited to a hole, a hook, and a handle. For example, when the pulling portion 322 is a hole, the circuit breaker piece 32 may be removed from the first accommodating portion 34 through cooperation of a hook and the hole; when the pulling portion 322 is a hook, the circuit breaker piece 32 may be removed from the first accommodating portion 34 with a lifting hook engaging with the hook; and when the pulling portion 322 is a handle, an operator can directly pull out the circuit breaker piece 32 from the first accommodating portion 34 with the handle.

In this technical solution, when the circuit breaker piece 32 needs to be detached, the pulling portion 322 may cooperate with a tool to detach the circuit breaker piece 32 from the first accommodating portion 34, reducing the detachment difficulty of the circuit breaker piece 32. When the battery 100 needs maintenance or the power-off device 3 is mounted on the battery 100, the pulling portion 322 can improve the detachment efficiency of the circuit breaker piece 32, improving the maintenance or mounting efficiency of the battery 100.

In some embodiments of this application, as shown in FIG. 3 and FIG. 5, the pulling portion 322 is a handle, and in a protruding direction of the convex portion 35, a height of the handle relative to the set surface 311 is greater than or equal to a height of the convex portion 35; and when the height of the handle relative to the set surface 311 is greater than the height of the convex portion 35, the handle can be accommodated by the second accommodating portion 37.

The above technical solution can be understood as follows: the handle may extend out of the annular space formed by the convex portion 35 on the set surface 311, and an operator or an external tool can more easily act on the handle with fewer obstacles in a surrounding space of the handle, facilitating the removal of the circuit breaker piece 32 from the first accommodating portion 34.

In some embodiments of this application, the insulating base 31 is provided with a set surface 311, the circuit breaker piece 32 is provided on the set surface 311, the power-off device 3 further includes a cover plate 36, a set space is formed between the cover plate 36 and the set surface 311, the set space is configured for mounting a fastening plate 4, a second accommodating portion 37 is provided on a side of the cover plate 36 close to the set surface 311, and at least part of the circuit breaker piece 32 is located in the second accommodating portion 37.

The cover plate 36 may refer to a shell component with a relatively large height.

The second accommodating portion 37 may refer to an opened groove on the cover plate 36, the circuit breaker piece 32 is provided on the set surface 311, and at least part of the circuit breaker piece 32 may be located in the second accommodating portion 37.

In the above technical solution, the cover plate 36 may accommodate the circuit breaker piece 32, reducing the probability of dust or water stains falling on the circuit breaker piece 32, thereby reducing the impact of dust or water stains on the circuit breaker piece 32 and helping reduce the probability of failure of the circuit breaker piece 32.

In some embodiments of this application, as shown in FIG. 3, the power-off device 3 further includes a sealing ring 38, and the sealing ring 38 is provided on a side of the cover plate 36 close to the set surface 311. In this technical solution, the sealing ring 38 can achieve sealing between the cover plate 36 and the fastening plate 4, improving the dustproof and waterproof performance of the circuit breaker piece 32, further reducing the impact of dust or water stains on the circuit breaker piece 32, and reducing the probability of failure of the circuit breaker piece 32.

In some embodiments of this application, as shown in FIG. 3, the cover plate 36 is provided with a first mounting hole 361, the set surface 311 is provided with a second mounting hole 312, the fastening plate 4 is provided with a third mounting hole 4a, the power-off device 3 further includes a third fastener 43, and the third fastener 43 passes through the first mounting hole 361, the second mounting hole 312, and the third mounting hole 4a.

In this technical solution, the cover plate 36, the insulating base 31, and the fastening plate 4 are fastened together through the cooperation of the third fastener 43, the first mounting hole 361, the second mounting hole 312, and the third mounting hole 4a. The fastening method is relatively simple, and good fastening effect can be achieved.

In some embodiments of this application, as shown in FIG. 3, the set surface 311 is provided with a fourth mounting hole 313, the fastening plate 4 is provided with a fifth mounting hole 4b, the power-off device 3 further includes a fourth fastener 44, and the fourth fastener 44 passes through the fourth mounting hole 313 and the fifth mounting hole 4b to first fasten the insulating base 31 on the fastening plate 4.

Optionally, the second mounting hole 312 is a screw hole, and the third fastener 43 is a bolt.

In some embodiments of this application, as shown in FIG. 3 and FIG. 5, the circuit breaker piece 32 is provided with at least two lead-out portions 323, and the at least two lead-out portions 323 are electrically connected inside the circuit breaker piece 32, where the at least two lead-out portions 323 are connected to the at least two conductive pieces 33 in a one-to-one correspondence.

The lead-out portion 323 may refer to an electrical connection component protruding from the circuit breaker piece 32, which may include but is not limited to a lead-out sheet and a lead-out wire. A material of the lead-out portion 323 is a conductive material, including but not limited to copper, silver, and the like.

In the above technical solution, since at least two conductive pieces 33 are provided and both are electrically connected to the circuit breaker piece 32, at least two lead-out portions 323 are provided on the circuit breaker piece 32, and the lead-out portions 323 are electrically connected to the corresponding conductive pieces 33, facilitating the electrical connection between the conductive pieces 33 and the circuit breaker piece 32. In this case, the connection between the circuit breaker piece 32 and the conductive pieces 33 are relatively regular, aesthetically pleasing and easy for electrical connection.

In some embodiments of this application, as shown in FIG. 3 and FIG. 5, an adapter 39 is provided between the lead-out portion 323 and the corresponding conductive piece 33, and the adapter 39 is provided in the first accommodating portion 34 and is electrically connected to the conductive piece 33 and the lead-out portion 323.

The adapter 39 may refer to a component that guides current between the lead-out portion 323 and the conductive piece 33, and a material of the adapter 39 is a conductive material, including but not limited to copper, silver, and the like.

In the above technical solution, the lead-out portion 323 and the conductive piece 33 are electrically connected through the adapter 39. Since the circuit breaker piece 32 is frequently detached from the first accommodating portion 34, the wear caused by frequent detachment of the circuit breaker piece 32 is mainly concentrated on the adapter 39, and the conductive piece 33 does not contact the circuit breaker piece 32 and is not worn. This reduces a replacement frequency and cycle of the conductive piece 33 and prolongs a service life of the conductive piece 33. Moreover, since the adapter 39 is a consumable part, only the adapter 39 needs to be replaced. Since the replacement frequency of the conductive piece 33 is reduced, a probability of error caused by positioning accuracy of the conductive piece 33 on the insulating base 31 due to replacement can also be reduced.

In some embodiments of this application, as shown in FIG. 3 and FIG. 5, the lead-out portion 323 is provided with a first hole 323a, the adapter 39 is provided with a second hole 39a, the power-off device 3 further includes a first fastener 41, and the first fastener 41 passes through the first hole 323a and the second hole 39a.

In the above technical solution, the adapter 39 can fasten the lead-out portion 323, improving the mounting reliability and stability of the circuit breaker piece 32 in the first accommodating portion 34. The lead-out portion 323 is fastened to the adapter 39 through the cooperation of the first fastener 41, the first hole 323a, and the second hole 39a. This fastening method is relatively simple, and good fastening effect can be achieved.

In some embodiments of this application, as shown in FIG. 5, the adapter 39 is provided with a third hole 39b, the insulating base 31 is provided with a fourth hole 31a communicating with the first accommodating portion 34, the conductive piece 33 is provided with a fifth hole 33a, the power-off device 3 further includes a second fastener 42, and the second fastener 42 passes through the fifth hole 33a, the fourth hole 31a, and the third hole 39b.

In the above technical solution, the adapter 39 can fasten the conductive piece 33, improving the mounting reliability and stability of the conductive piece 33 on the insulating base 31. The lead-out portion 323 is fastened to the adapter 39 through the cooperation of the first fastener 41, the first hole 323a, and the second hole 39a. This fastening method is relatively simple, and good fastening effect can be achieved. The conductive piece 33 can be detached from the insulating base 31, facilitating maintenance or replacement of the conductive piece 33.

In some embodiments of this application, as shown in FIG. 5, the conductive piece 33 is provided at an end of the insulating base 31 away from the opening 34a, and the lead-out portion 323 is close to the opening 34a on the circuit breaker piece 32. In this technical solution, a distance between the conductive piece 33 and the lead-out portion 323 is relatively long, and they are electrically connected through the adapter 39. Since the circuit breaker piece 32 is located in the first accommodating portion 34, the conductive piece 33 and the lead-out portion 323 are not positioned extremely close. This helps improve the stability and reliability of the circuit breaker piece 32 in the first accommodating portion 34.

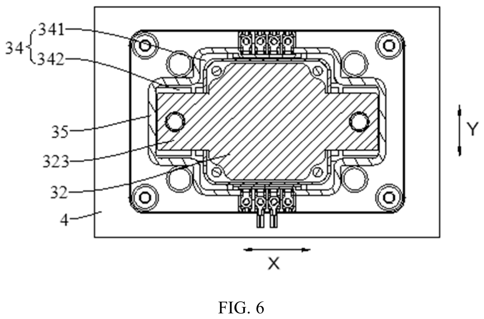

In some embodiments of this application, as shown in FIG. 3 and FIG. 6, the circuit breaker piece 32 has a width direction. In the width direction, a width of the lead-out portion 323 is smaller than a width of the circuit breaker piece 32; the first accommodating portion 34 includes a first space 341 and a second space 342 communicating with each other; in the width direction, a width of the second space 342 is smaller than a width of the first space 341; the circuit breaker piece 32 is provided in the first space 341; and the lead-out portion 323 is provided in the second space 342.

As shown in FIG. 3, the width direction may refer to a direction in which the circuit breaker piece 32 has a smaller dimension, for example, a second direction (that is, Y direction) in FIG. 3. The two lead-out portions 323 may be located on two sides of the circuit breaker piece 32 in the length direction, where the length direction may refer to a second direction (that is, X direction) in FIG. 3. The lead-out portion 323, as a component electrically contacting the conductive piece 33 on the circuit breaker piece 32, has a width smaller than the width of the circuit breaker piece 32. This can reduce material and save space, helping reduce the space of the first accommodating portion 34 and reduce the volume of the insulating base 31.

In the first accommodating portion 34, the first space 341 can accommodate the circuit breaker piece 32 and limit the position of the circuit breaker piece 32, and the second space 342 can accommodate the lead-out portion 323 and limit the position of the lead-out portion 323. Since the circuit breaker piece 32 and the lead-out portion 323 are separately limited, loosening of the circuit breaker piece 32 and the lead-out portion 323 can be effectively prevented, improving the mounting reliability and stability of the circuit breaker piece 32 and the lead-out portion 323. Further, the first space 341 is adapted to the circuit breaker piece 32, and the second space 342 is adapted to the lead-out portion 323, which can reduce the volume of the first accommodating portion 34. If the first accommodating portion 34 is a limiting plate protruding on the insulating base 31, material can be saved; if the first accommodating portion 34 is an opened groove on the insulating base 31, a dimension of the groove can be reduced, helping improve strength of the insulating base 31 and prolonging the service life of the insulating base 31.

In the above technical solution, with the width of the lead-out portion 323 smaller than the width of the circuit breaker piece 32, material can be saved and the space of the first accommodating portion 34 can be reduced. The first accommodating portion 34 includes the first space 341 and the second space 342, where the first space 341 may be adapted to the circuit breaker piece 32, and the second space 342 may be adapted to the lead-out portion 323, helping reduce the volume of the insulating base 31.

In some embodiments of this application, as shown in FIG. 5, a set wall 343 is provided inside the first accommodating portion 34; the set wall 343 is directly opposite the opening 34a; the set wall 343 is provided with a first plug-in member 3431; the circuit breaker piece 32 is provided with a second plug-in member 324; and the second plug-in member 324 is plug-fitted with the first plug-in member 3431.

It can be understood that the set wall 343 and the opening 34a are located in an assembly direction of the circuit breaker piece 32, the first plug-in member 3431 is provided on the set wall 343, and when the circuit breaker piece 32 is mounted into the first accommodating portion 34 along the assembly direction, with the movement of the circuit breaker piece 32, the second plug-in member 324 may be plug-fitted with the first plug-in member 3431, and a signal on the circuit breaker piece 32 can be transmitted through the first plug-in member 3431 and the second plug-in member 324.

In an embodiment provided by this application, the power-off device 3 includes an insulating base 31, a circuit breaker piece 32, and a cover plate 36. The insulating base 31 is provided with two conductive pieces 33, and the conductive pieces 33 may be connecting copper bars. The insulating base 31 is provided with an accommodating groove, and the circuit breaker piece 32 may be a pyrofuse and provided in the accommodating groove. The circuit breaker piece 32 is provided with two lead-out portions 323, and the two lead-out portions 323 are electrically connected to the two conductive pieces 33 respectively. The two conductive pieces 33 are detachably connected to the insulating base 31 through locking bolts, and the two lead-out portions 323 are detachably provided in the accommodating groove through locking bolts. The cover plate 36 is a sealing protection cover. A fastening plate 4 is provided between the insulating base 31 and the cover plate 36. The cover plate 36 is fastened to the insulating base 31 by a locking bolt passing through the fastening plate 4.

In a second aspect, embodiments of this application further provide a battery 100, including the power-off device 3.

In a third aspect, embodiments of this application further provide an electric device, including the power-off device 3 or the battery 100.

The electric device may be a vehicle 1000. The vehicle 1000 includes a battery 100. The battery 100 is integrated on a chassis of the vehicle 1000, so that the battery 100 and the chassis form a CTC integrated chassis. By integrating maintenance power-off and short-circuit power-off of a high-voltage circuit in one power-off device 3, one component implements two functions, which can save space and satisfy requirements for a space provided by an energy compartment of the vehicle 1000.

It should be noted that, without conflict, the embodiments and features in the embodiments of this application can be combined with each other.

The above are only preferred embodiments of this application and are not intended to limit this application. For those skilled in the art, various modifications and changes can be made to this application. Any modification, equivalent replacement, improvement, and the like made within the spirit and principles of this application should be included in the protection scope of this application.

## Claims

1. A power-off device, comprising:
an insulating base, wherein the insulating base is provided with at least two conductive pieces; and
a circuit breaker piece, wherein the circuit breaker piece is detachably provided on the insulating base; the circuit breaker piece is electrically connected in series to the at least two conductive pieces, so that an assembly formed by the circuit breaker piece and the at least two conductive pieces is capable of transmitting electrical energy; and the circuit breaker piece is configured to be capable of cutting off the electrical connection when a preset condition is satisfied.

2. The power-off device according to claim 1, wherein the preset condition is that a transmitted current reaches a set value or an external control instruction is received.

3. The power-off device according to claim 1, wherein the insulating base is provided with a first accommodating portion, the first accommodating portion is provided with an opening, and at least part of the circuit breaker piece is provided in the first accommodating portion.

4. The power-off device according to claim 3, wherein the insulating base is provided with a set surface, the opening is provided on the set surface, and the set surface is provided with an annular convex portion along a circumferential edge of the opening.

5. The power-off device according to claim 4, wherein in a protruding direction of the convex portion, at least part of the circuit breaker piece is located in an annular space formed by the convex portion.

6. The power-off device according to claim 5, wherein the power-off device further comprises a cover plate, a set space is formed between the cover plate and the set surface, the set space is configured for mounting a fastening plate, a second accommodating portion is provided on a side of the cover plate close to the set surface, and part of the convex portion is located in the second accommodating portion.

7. The power-off device according to claim 4, wherein the circuit breaker piece is provided with an outer end close to the opening, and a pulling portion is provided on the outer end.

8. The power-off device according to claim 7, wherein the pulling portion is a handle, and in a protruding direction of the convex portion, a height of the handle relative to the set surface is greater than or equal to a height of the convex portion.

9. The power-off device according to claim 1, wherein the insulating base is provided with a set surface, the circuit breaker piece is provided on the set surface, the power-off device further comprises a cover plate, a set space is formed between the cover plate and the set surface, the set space is configured for mounting a fastening plate, a second accommodating portion is provided on a side of the cover plate close to the set surface, and at least part of the circuit breaker piece is located in the second accommodating portion.

10. The power-off device according to claim 6 or 9, wherein the power-off device further comprises a sealing ring, and the sealing ring is provided on a side of the cover plate close to the set surface.

11. The power-off device according to claim 3, wherein the circuit breaker piece is provided with at least two lead-out portions, and the at least two lead-out portions are electrically connected inside the circuit breaker piece, wherein the at least two lead-out portions are connected to the at least two conductive pieces in a one-to-one correspondence.

12. The power-off device according to claim 11, wherein an adapter is provided between the lead-out portion and the corresponding conductive piece, and the adapter is provided in the first accommodating portion and is electrically connected to the conductive piece and the lead-out portion.

13. The power-off device according to claim 12, wherein the lead-out portion is provided with a first hole, the adapter is provided with a second hole, the power-off device further comprises a first fastener, and the first fastener passes through the first hole and the second hole.

14. The power-off device according to claim 12, wherein the adapter is provided with a third hole, the insulating base is provided with a fourth hole communicating with the first accommodating portion, the conductive piece is provided with a fifth hole, the power-off device further comprises a second fastener, and the second fastener passes through the fifth hole, the fourth hole, and the third hole.

15. The power-off device according to claim 11, wherein the circuit breaker piece has a width direction; in the width direction, a width of the lead-out portion is smaller than a width of the circuit breaker piece; the first accommodating portion comprises a first space and a second space communicating with each other; in the width direction, a width of the second space is smaller than a width of the first space; the circuit breaker piece is provided in the first space; and the lead-out portion is provided in the second space.

16. The power-off device according to claim 3, wherein a set wall is provided inside the first accommodating portion, the set wall is directly opposite the opening, the set wall is provided with a first plug-in member, the circuit breaker piece is provided with a second plug-in member, and the second plug-in member is plug-fitted with the first plug-in member.

17. A battery, comprising the power-off device according to any one of claims 1 to 16.

18. An electric device, comprising the power-off device according to any one of claims 1 to 16, or the battery according to claim 17.
